# EUROPÄISCHE PATENTSCHRIFT

(11) **EP 0 624 218 B1**
(45) Veröffentlichungstag und Bekanntmachung des Hinweises auf die Patenterteilung: **29.05.1996**
(21) Anmeldenummer: 93902036.8
(22) Anmeldetag: 20.01.1993
(51) Int. Cl.: E04B 2/74, F16H 57/08, G09F 15/00, E05D 1/00, F16C 11/04

(54) **VERBINDUNG VON BAUELEMENTEN**
CONNECTION BETWEEN COMPONENTS
ASSEMBLAGE D'ELEMENTS

(30) Priorität: 21.01.1992 DE 9200642 U
(43) Veröffentlichungstag der Anmeldung: 17.11.1994
(73) Patentinhaber: Rixen, Wolfgang, Dipl.-Ing., D-42699 Solingen (DE); Pies, Gerrit, D-42699 Solingen (DE)
(72) Erfinder: Rixen, Wolfgang, Dipl.-Ing., D-42699 Solingen (DE); Pies, Gerrit, D-42699 Solingen (DE)
(74) Vertreter: Eichler, Peter, Dipl.-Ing.
(86) Internationale Anmeldenummer: DE9300043
(87) Internationale Veröffentlichungsnummer: WO9314280

(56) Entgegenhaltungen:
- EP-A- 0 109 466
- EP-A- 0 292 833
- EP-A- 0 325 528
- WO-A-86/07111
- DE-A- 2 541 209
- DE-A- 3 118 755
- US-A- 4 999 879

## Beschreibung

Die Erfindung bezieht sich auf eine Verbindung von Bauelementen, insbesondere für Profilstäbe, Zahnräder od.dgl., die rotatorisch aufeinander abrollen und dabei an ihrem Umfang mit abwechselnd angeordneten, gleichbleibend profilierten Verbindungsleisten und Verbindungsnuten nach Art der Zahnräder kämmend ineinander greifen, und die gegen ungewolltes radiales Außereingriffkommen querformschlüssig gekoppelt sind, wobei die Verbindungsleisten und Verbindungsnuten um die umfangsparallelen Längsachsen der Bauelemente relativverstellbar sind.

Eine Verbindung mit den obengenannten Merkmalen ist aus der EP-A-0 109 466 bekannt. Die bekannten Bauelemente sind Profilstäbe mit im wesentlichen D-förmigem Querschnitt, die an ihren Rundungen verzahnt sind und um die umfangsparallelen Längsachsen relativverstellbar sind, welche durch Klammerteile zusammengehalten werden. Ohne diese besonderen Klammerteile würden die Profilstäbe bei üblichem Gebrauch nicht einander anliegen, da ihre zahnradartige Umfangsgestaltung nicht gegen ungewolltes radiales Entfernen voneinander sichern kann.

Eine Verbindung mit ineinander greifende Hinterschneidungen aufweisende Bauelemente ist bei einem Gerüst für Trennwände aus der DE-OS 25 41 209 bekannt. Die Bauelemente sind Profilstäbe mit pfeilkreuzförmigem Querschnitt der Verbindungsleisten und der Verbindungsnuten, so daß eine Verbindungsleiste mit ihrem Pfeilkreuzkopf in eine einen pfeilkreuzkopfförmigen Querschnitt aufweisende Verbindungsnut eingeschoben werden kann. Die Relativlage zweier auf diese Weise zusammengebauter Profilstäbe ist unveränderlich, wenn man von dem durch Toleranzen bedingten Bewegungsspiel absieht. Der Querschnitt eines solchen Profilstabs ist im wesentlichen quadratisch.

Eine allgemein bekannte Verbindung von Profilstäben mit quadratischem oder rechteckigem Querschnitt ist so ausgebildet, daß die benachbarten Profilstäbe über Scharniere miteinander verbunden werden. Für die Befestigung der Scharniere werden am Außenumfang der Stäbe vorhandene Längsnuten herangezogen, in denen Schraubbefestigungselemente festgelegt werden können. Mit diesen Scharnieren können die Profilstäbe und damit die aus solchen Profilstäben gebildeten Wand- oder Trennelemente im Winkel zueinander angeordnet werden, was beispielsweise erforderlich ist, um Messebauten oder Produktionsräume zu gestalten und gegen einander abgrenzen zu können. Die Scharniere bedeuten jedoch einen gewissen baulichen Aufwand und sie erfordern für ihren Anbau an die Profilstäbe einen nicht unbeträchtlichen Zeitaufwand. Darüber hinaus sind die Scharniere nur mit einem Klappwinkel von 90° versehen, um größere Traglasten aufnehmen zu können. Das hat zur Folge, daß Veränderungen bei der Anordnung von Wandelementen nicht ohne weiteres durchgeführt werden können, wenn ein Klappwinkel von über 90° erforderlich ist. Das Scharnier muß dann umgebaut werden. Darüber hinaus sind derartige Wände nicht optisch dicht.

Demgegenüber liegt der Erfindung die Aufgabe zugrunde, eine Verbindung mit den eingangs genannten Merkmalen so auszugestalten, daß ihren Bauelementen Schwenkwinkel bis zu 360° bzw. rotatorische Bewegungen ermöglicht werden.

Diese Aufgabe wird dadurch gelöst, daß das ungewollte radiale Außereingriffkommen der Bauelemente mit den Verbindungsleisten und Verbindungsnuten verhindert wird, indem sie beim Aufeinanderabrollen mit Hinterschneidungen ineinander greifen.

Für die Erfindung ist von Bedeutung, daß Relativverstellungen der Bauelemente möglich sind, ohne deren querformschlüssigen Zusammenhalt aufgeben zu müssen. Verbindungsleisten und Verbindungsnuten bleiben bei sämtlichen Bewegungen der Bauelemente um umfangsparallele Längsachsen in Eingriff. Dieser Eingriff ist so ausgestaltet, daß die Verbindungsleisten und die Verbindungsnuten bei Relativbewegungen der Bauelemente nach Art der Zahnräder kämmen. Anders als bei diesen ist jedoch ein ständiger querformschlüssiger Zusammenhalt gewährleistet. Dieser querformschlüssige Zusammenhalt ist für die Bauelemente und für die mit ihnen hergestellten Vorrichtungen von großer Bedeutung, weil sie Verbindungselemente überflüssig machen, die sonst eingesetzt werden müßten, um diesen Zusammenhalt quer zu den Längsachsen zu erreichen. Bei einer Ausbildung der Bauelemente als Profilstäbe wären also sonst die oben beschriebenen Scharniere notwendig und bei einer Ausbildung der Bauelemente als Zahnräder wäre es notwendig, deren Rotationsachsen durch zusätzliche bauliche Maßnahmen zu sichern, wie beispielsweise durch den Einsatz von Gehäusen. Zwar bedeutet die spezielle Profilierung der Bauelemente mit Hinterschneidungen einen zusätzlichen baulichen Aufwand durch zusätzliches Profilierungsmaterial, das jedoch auch der Versteifung des Bauelements dient und damit eine Doppelfunktion erfüllt.

Um den kämmenden Eingriff der Bauelemente über ihre Verbindungsleisten und Verbindungsnuten zu erleichtern, wird die Verbindung so ausgestaltet, daß die Verbindungsleisten zumindest umfangsabschnittsweise abrollfähige Umfangsflächen und die Verbindungsnuten zumindest umfangsabschnittsweise den Umfangsflächen zugeordnete Abrollfächen aufweisen. Dadurch wird gewährleistet, daß Verbindungsleisten und Verbindungsnuten dort aufeinander abrollen können, wo es aus Gründen der Kinematik notwendig ist, um Verschleiß zu minimieren. Dementsprechend werden die abrollfähigen Umfangsflächen der Verbindungsleisten und die Abrollflächen der Verbindungsnuten aufeinander abgestimmt. Es versteht sich, daß diese abgestimmte Ausgestaltung je nach Formgebung der Bauelemente unterschiedlich ist, also beispielsweise dem Durchmesser eines Zahnrades oder eines zahnradartigen Bauelements entspricht.

Die Verbindung kann so ausgestaltet werden, daß die abrollfähigen Umfangsflächen von pilzkopfartigen Verbindungsleisten mit ellipsenartiger Dachfläche ausgebildet sind und/oder daß die Abrollflächen der Verbindungsnuten ellipsenartig ausgebildet sind. Die Umfangsgestaltung eines Bauelements ist derart, daß seine Verbindungsleisten einen pilzkopfartigen Querschnitt haben, der elliptisch oder ellipsenartig ausgebildet ist. Zwischen zwei derartigen Verbindungsleisten eines beispielsweise als Profilstab ausgebildeten Bauelements ist jeweils eine Verbindungsnut vorhanden, die ein spezielles Nutenprofil aufweist. Dieses Nutenprofil ist ein Abrollprofil für die Dachfläche eine Pilzkopfes. Aufgrund dieser Profilierung findet beim relativen Verschwenken oder Rotieren zweier Bauelemente eine definierte Abwälzbewegung zwischen diesen statt, so daß sie mit zueinander parallelen Längsachsen relativ verschwenkt bzw. zueinander verstellt oder rotiert werden. Die pilzkopfartige Profilierung des Leistenquerschnitts und die pilzkopfähnliche, ellipsenartige Profilierung der Verbindungsnuten sorgen dafür, daß die Bauelemente nicht quer getrennt werden können, sofern nur die Profile der Nuten auf die jeweiligen Profile des Pilzkopfes abgestimmt sind. In diesem Fall entstehen Hinterschneidungen, die ein Außereingriffkommen einer Verbindungsleiste mit einer Verbindungsnut nur dann gestatten, wenn eine der Verbindungsleiste benachbarte Verbindungsnut des einen Bauelements mit der der Verbindungsnut benachbarten Verbindungsleiste des anderen Bauelements in querformschlüssigen Eingriff gelangt ist. Damit ist quer zu den Bauelementen eine unlösbare Verbindung geschaffen, die der Profilgestaltung der Bauelemente entsprechend tragfähig ist. Diese bestehen beispielsweise aus Metall oder aus einem elastischen Werkstoff, der jedoch ein quer zu den Achsen bzw. zum Umfang infolge seiner Elastizität ermöglichendes Trennen der Bauelemente nicht zuläßt.

Von Vorteil ist es, wenn die zwischen dem jeweiligen Dachflächenrand und dem am Pilzstiel befindlichen Abrollflächenrand gelegenen Außenumfangsflächen zweier Pilzköpfe in Eingriffswechselstellung vollflächig aneinander liegen. In diesem Fall ist die Profilierung so gestaltet, daß im Eingriffswechselfall eine vergleichsweise geringe Flächenpressung vorliegt. Diese Gestaltung ermöglicht es auch, möglichst großflächige tragende Querschnitte im Bereich zwischen der Dachfläche einer Verbindungsleiste und einer Abrollfläche einer benachbarten Verbindungsnut vorzusehen.

Wenn die zwischen dem jeweiligen Dachflächenrand und dem am Pilzstiel befindlichen Abrollflächenrand gelegenen Außenumfangsflächen zweier Pilzköpfe stetig gekrümmt ausgebildet sind, ergibt sich im Fall des Eingriffswechsels einer Verbindungsleiste und einer Verbindungsnut zwar keine Minimierung der Flächenpressung, jedoch wird eine Unstetigkeit im Bewegungsablauf der abrollend kämmenden Bauelemente vermieden. Das ermöglicht beispielsweise bei einer Ausbildung der Bauelemente als Zahnräder höhere Rotationsgeschwindigkeiten und/oder eine vergleichmäßigte Kraftübertragung, infolge derer auch die dynamische Belastung der Bauelemente herabgesetzt wird.

Die Verbindung wird zweckmäßigerweise so gestaltet, daß der Abstand zwischen den Dachflächenrändern einer Verbindungsleiste etwa dreimal so groß ist, wie die Stieldicke zwischen den Abrollflächen benachbarter Verbindungsnuten. Es ergibt sich eine hinreichend breite Dachfläche, andererseits aber auch eine ausreichend dicke Verbindungsleiste im Bereich des Stiels, also an der dünnsten Stelle der Leiste.

Damit die Bauelemente für vielfältige Einsatzzwecke genutzt werden können, ist die Verbindung so ausgebildet, daß die als Profilstäbe ausgebildeten Bauelemente von den Verbindungsnuten separate Befestigungsnuten aufweisen. Die Befestigungsnuten können den jeweiligen Befestigungserfordernissen entsprechend ausgebildet werden, wobei alle bekannten Profile zum Einsatz kommen können, sofern sie die relativen Schwenkverstellungen der Stäbe nicht behindern.

Üblicherweise genügt es, z.B. beim Einsatz der Profilstäbe für den Aufbau von Wandelementen, daß letztere mit ihren Großflächen dicht aneinanderliegen können, beispielsweise um einen kleinvolumigen Stapel zu bilden. Für einen solchen Fall ist es ausreichend, wenn die Verbindung so gestaltet ist, daß die Verbindungsleisten und die Verbindungsnuten über 180° des Umfangs eines als Profilstab ausgebildeten Bauelements verteilt vorhanden sind.

Der Zusammenbau zweier Profilstäbe bzw. der Zusammenbau von mit solchen Profilstäben hergestellten Wandelementen kann durch unterschiedliche Techniken erfolgen, beispielsweise unter Ausnutzung der Elastizität des Werkstoffs der Stäbe, oder unter Ausnutzung des Ausdehnungsverhaltens des Werkstoffes der Stäbe bei Temperaturänderungen. Der apparativ am wenigsten aufwendige Zusammenbau wird jedoch dadurch erreicht, daß mindestens zwei als Profilstäbe ausgebildete Bauelemente mit Verbindungsleisten und -nuten längs zusammenschiebbar sind.

Die Verbindung kann so ausgestaltet werden, daß die Bauelemente zumindest auf einen Teil ihres Umfangs einen gleich großen Umfangsdurchmesser sowie gleich große Leisten- und Nutenzahlen aufweisen. Infolgedessen sind die Bauelemente zumindest paarweise gleich ausgebildet, was eine entsprechende Fertigungsrationalisierung bewirkt. Auch die Belastungen der Bauelemente sind dementsprechend gleich.

Es hat sich als vorteilhaft herausgestellt, wenn mindestens ein Bauelement als Zahnrad mit einer Zähnezahl von mindestens 8 ausgebildet ist. Ein derartiges Bauelement ist in besonders vielfältiger Weise in Getriebe- und Antriebssystemen zu verwenden, wo es mit gleich ausgebildeten Bauelementen oder mit im Querschnitt anders gestalteten, eingriffsabgestimmten Bauelementen zusammenwirken kann.

Die Verbindung kann auch so ausgestaltet sein, daß das eine Bauelement einen größeren Umfangsdurchmesser als das andere Bauelement hat oder plan ist, und daß zwei Verbindungsleisten des anderen Bauelements in eine einzige verbreiterte Verbindungsnut des einen Bauelements eingreifen. Infolge derartiger Ausbildungen der Bauelemente wachsen deren Einsatzmöglichkeiten. Durch die Verbreiterung einer Verbindungsnut eines Bauelements ist es möglich, dessen Umfangsdurchmesser entschieden zu vergrößern, bis hin zum Umfangsdurchmesser ∞. Die Verbreiterung einer Verbindungsnut bewirkt dabei, daß ein kämmender Eingriff des anderen Bauelements in das eine, gestreckte Bauelement erhalten bleiben kann, also die erwünschte relative Abrollbewegung gewährleistet wird. Ist das eine Bauelement vergleichsweise umfangsdurchmessergroß oder gar plan, so können auch mehrere andere Bauelemente mit dem einen in besonders freizügiger Ausgestaltung zusammenwirken.

Wenn die Verbreiterung einer Verbindungsnut so groß ist, daß ein unruhiger Bewegungsablauf zwischen den Bauelementen befürchtet werden muß, kann die Verbindung so ausgestaltet werden, daß das eine Bauelement eine zwischen zwei Verbindungsleisten des anderen Bauelements greifende Führungsleiste aufweist. Die Führungsleiste übernimmt eine Lagestabilisierung an den Verbindungsleisten des anderen Bauelements, so daß die Eingriffssicherheit bzw. die Querformschlüssigkeit der Bauelemente insbesondere beim Eingriffswechsel gewährleistet bleibt.

Es ist vorteilhaft, wenn die Bauelemente als Profilstäbe für Schutz- und Trennwände ausgebildet sind. Die Verbindung bildet bei diesen Wänden ein Gelenk über die gesamte Stablänge. Mehrere Wandelemente lassen sich pontonartig koppeln und ihre Verbindungen gestatten eine vollständig gestreckte Anordnung einerseits ebenso, wie ihr Zusammenfalten zum Zwecke des Stapels andererseits.

Vorteilhafterweise wird die Verbindung so gestaltet, daß die Bauelemente als Bestandteile eines Greifbehälters einerseits und einer fixierten Halterung andererseits und/oder von koppelbaren Arbeitspulten ausgebildet sind. Infolge dieser Ausbildung kann der Greifbehälter trotz seiner formschlüssigen Verbindung mit der fixierten Halterung geschwenkt werden und ist infolgedessen an Arbeitsplätzen leichter zugänglich. Entsprechend können die Arbeitspulte unter beliebigen Winkeln angeordnet werden, ohne daß sich offene Spalte bzw. ungewollte Entfernungen der Arbeitspulte voneinander ergeben.

Es ist vorteilhaft, daß die Bauelemente als Bestandteile von Gelenken und Scharnieren von Maschinenbausystemen und/oder als Bestandteile von Greifern oder Armen von Handhabungseinrichtungen und/oder als Bestandteile von Bewegungsgetrieben ausgebildet sind. Die Gelenke und Scharniere von Maschinenbausystemen können große Öffnungswinkel haben. Es ist nicht erforderlich, ihre Drehachse festzulegen. Die Konstruktion ist optisch dicht. Wenn die Bauelemente als Bestandteile von Greifern oder Armen von Handhabungseinrichtungen ausgebildet sind, können sie Bestandteile von mehreren Gelenken sein, z.B. um in Öffnungen bzw. bei Hinterschnitt beweglich zu sein. Bei ihrem Einsatz in Bewegungsgetrieben sind sie spezielle Zahnräder, die mit winkelabhängiger Beziehung von Rotation und erzeugter Translation arbeiten können.

Es ist auch vorteilhaft, wenn das andere Bauelement ein Zahnrad und das eine Bauelement ein antreibender und/oder angetriebener Strang ist. Bei einer derartigen Verbindung ergeben sich besondere Einsatzbereiche in der Fördertechnik. Der antreibende und/oder angetriebene Strang kann ein Zahnriemen sein. Es ergibt sich die Möglichkeit des Antriebs von Transportrollen durch einen solchen Zahnriemen. Als besonderer Vorteil ist bei einer derartigen Ausbildung der Bauelemente zu verzeichnen, daß eine Umschlingung des Zahnrads nicht notwendig ist. Viele sonst infolge der Umschlingung gegebenen Probleme sind nicht vorhanden. Der Riemen bzw. Strang wird mit dem Zahnrad eventuell auch mit konvexer Anordnung in Bezug auf das Zahnrad geführt und es ergibt sich eine erhöhte Sicherheit gegen Durchrutschen des Riemens. Entsprechendes gilt auch für Ketten, die wie beschrieben profiliert sind.

Für den Handling-Bereich ist es vorteilhaft, wenn das eine Bauelement eine Wand- oder Deckenplatte ist, an der das andere, als Zahnrad ausgebildete Bauelement in allen Richtungen der Platte verstellbar ist. Es können besonders flexible Versorgungssysteme erstellt werden. Die Rotationen des als Zahnrad ausgebildeten Bauelements ermöglichen in Kombination mit seiner achsparallelen Verschiebung z.B. an der Deckenplatte das Erreichen jeden beliebigen Punkts unterhalb dieser Deckenplatte, z. B. um ein Maschinenwerkzeug an jeder beliebigen Stelle des Raums unterhalb der Deckenplatte anordnen zu können, um es bedarfsweise zu einer Bearbeitung einsetzen zu können.

Die Erfindung wird anhand von in der Zeichnung dargestellten Ausführungsbeispielen erläutert. Es zeigt:
- Fig.1: die Stirnansichten zweier in Eingriff befindlicher Bauelemente, die sich mit ihren Außenumfängen an einander abwälzen können,
- Fig.1a: eine sektorale Teilansicht eines Bauelements der Fig.1 zur Erläuterung des relativen Schwenkverstellablaufs,
- Fig.2: eine vergrößerte Darstellung zweier Sektoren der in Eingriff befindlichen Bauelemente,
- Fig.3: teilweise geschnittene Darstellungen von Wandelementen mit Profilstäben, die gemäß der Erfindung ausgebildet sind,
- Fig.4: eine Darstellung der Wandelemente der Fig.3 in von dieser Figur abweichender relativer Schwenkstellung,
- Fig.5,6: der Fig.1 ähnliche Darstellungen von Bauelementen, von denen eines plan ausgebildet ist,
- Fig.7: eine perspektivische Ansicht von Bauelementen, deren eines entsprechend den planen Bauelementen der Fig. 5,6 kombiniert ausgebildet ist, und
- Fig.8: eine der Fig.7 ähnliche Ausgestaltung von Bauelementen, von denen eines mit großem Umfangsdurchmesser gekrümmt ist.

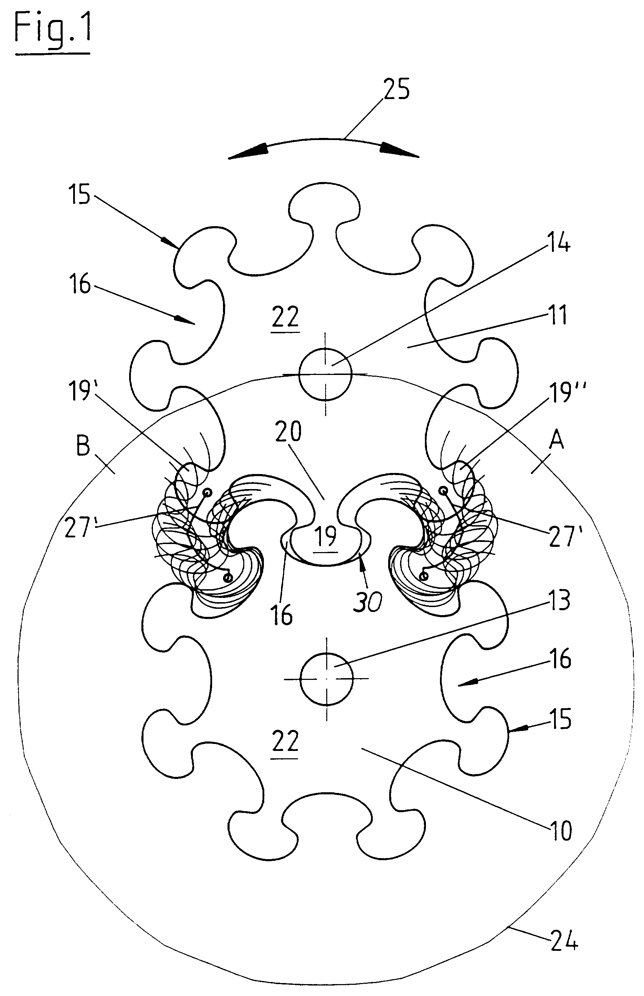

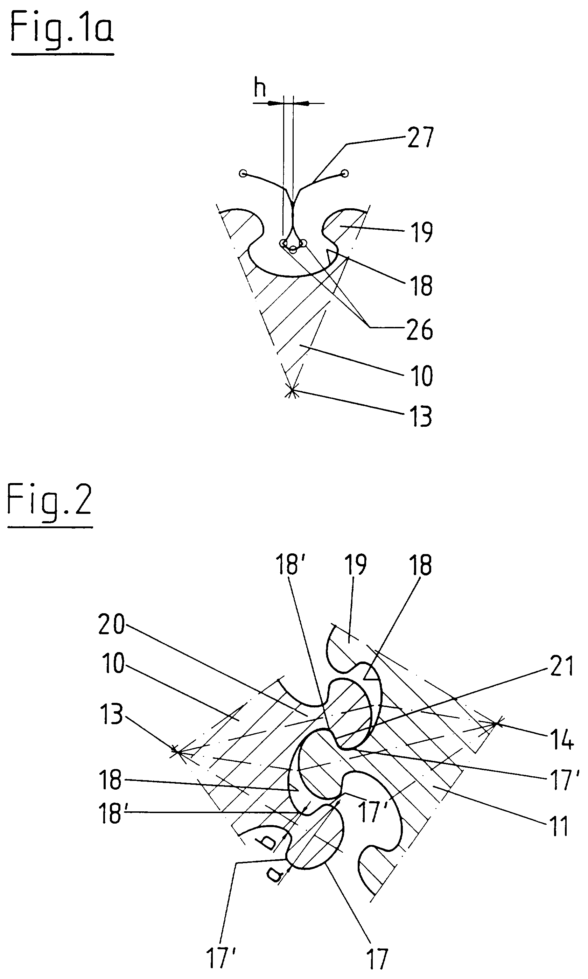

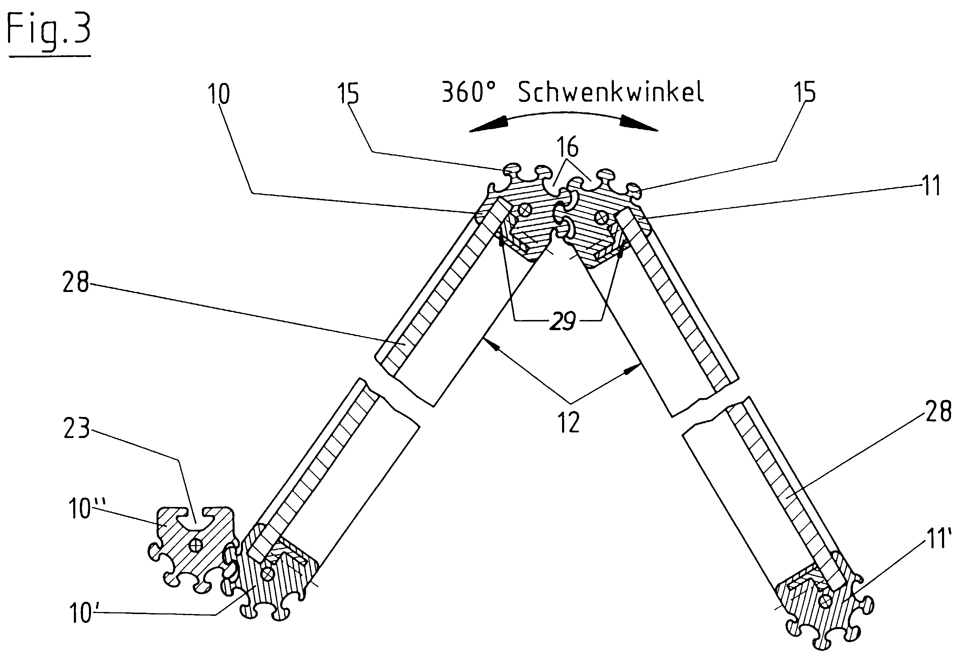

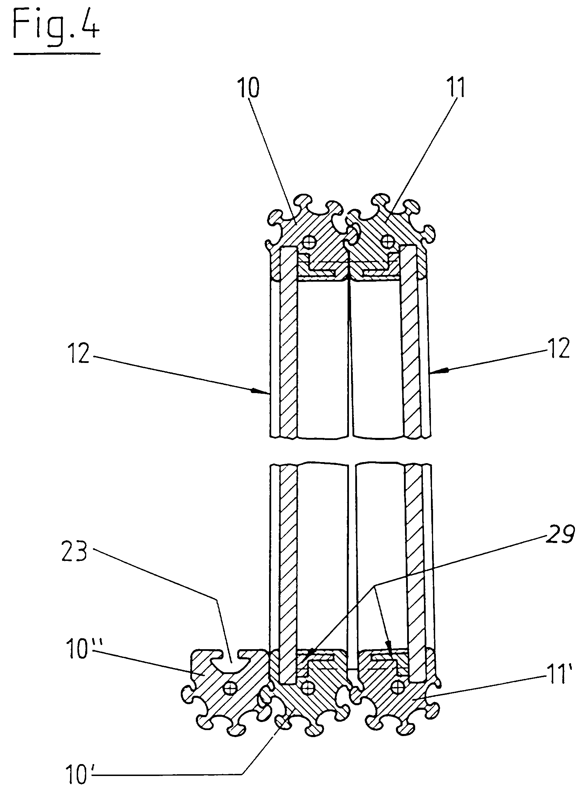

In Fig.1 sind zwei Bauelemente 10,11 dargestellt, die an ihrem kreisförmigen Außenumfang mit längs durchlaufenden Verbindungsleisten 15 und Verbindungsnuten 16 abwechselnd versehen sind. Es ergibt sich das ersichtliche Verzahnungsprofil, bei dem die Leisten 15 und die Nuten 16 Querverbindungsteile darstellen, welche im Eingriffsfall ein ungewolltes radiales Entfernen der Bauelemente 10,11 voneinander nicht gestatten. Hierzu ist der Querschnitt der Verbindungsleisten 15 pilzkopfartig. Es ist jeweils ein Pilzkopf 19 über einen Pilzstiel 20 am Zentralkörper 22 eines Bauelements 10,11 befestigt. Das obere Bauelement 10 kann sich auf einer nur angenähert kreisförmigen Bahn um das untere Bauelement 11 wälzen, was gemäß Fig.3,4 dazu benutzt wird, um Lageänderungen von z.B. Wandelementen 12 durchzuführen.

Aus Fig.1 ist ersichtlich, daß die dem Pilzkopf 19 benachbarten Pilzköpfe 19',19" die jeweils vielzählig angedeuteten Zwischenstellungen einnehmen, wenn sich die Längsachse 14 des Bauelements 11 zwischen den Punkten A,B der Bahn 24 in den Richtungen des Doppelpfeils 25 bewegt. In allen diesen Stellungen befindet sich der mittlere Pilzkopf 19 in formschlüssigem Eingriff mit der ihn aufnehmenden Nut 16 des Bauelements 10. Die Zwischenstellungen dieses Kopfs 19 sind der Übersichtlichkeit halber nicht dargestellt.

Jeder Pilzkopf 19, 19', 19" hat als abrollfähige Umfangsfläche 30 eine Dachfläche 17, die nach außen gerichtet ist und sich gemäß Fig.2 zwischen den im Abstand a gegenüberliegenden Dachflächenrändern 17' befindet. Dieser Abstand a ist die größte Breitenerstreckung des Pilzkopfes 19 bzw. der Verbindungsleiste 15. Die zwischen den Dachflächenrändern 17' gelegene Dachfläche 17 ist elliptisch oder ellipsenartig. Als ellipsenartig soll jede Formgebung angesehen werden, die ein dem Abrollen von elliptischen Flächen vergleichbaren Effekt hat, beispielsweise auch aus mehreren kleinen ebenen Flächenabschnitten zusammengesetzte Flächen. Der den Pilzkopf 19 tragende Pilzstiel 20 hat eine schmalste Stegstelle mit der Breite b. Die jedem Pilzkopf 19 benachbarten beiden Nuten 16 haben jeweils ein ellipsenförmiges oder ellipsenartiges Abrollprofil 18 zwischen zwei Abrollfächenrändern 18', die exakt an der schmalsten Stelle des Pilzstiels 20 liegen. Die minimale Stieldicke b ist für die radiale Verbindungsstabilität der Bauelemente 10,11 maßgeblich und sollte daher nicht zu klein sein. Eine zweckmäßige Bemessung liegt vor, wenn der Abstand a zwischen den Dachflächenrändern 17' etwa dreimal so groß wie die minimale Stieldicke b ist. Für die Ausbildung des Abrollprofils ist die strenge Einhaltung der Ellipsenform nicht erforderlich. Insbesondere ist es auch denkbar, eine Ellipsenform durch viele kleine aneinander anschliessende und ebene Flächenabschnitte anzunähern.

Zwischen einem Abrollflächenrand 18' einer Verbindungsnut 16 und dem benachbarten Dachflächenrand 17' ist eine Außenumfangsfläche 21, die an jedem Pilzkopf 19 so gestaltet ist, daß die Außenumfangsflächen 21 zweier in Nuten 16 eingreifender Pilzköpfe 19 der Bauelemente 10,11 vollflächig aneinanderliegen können. Das ist zwar für die Eingriffsfunktion nicht zwingend notwendig, ermöglicht aber geringe Flächenpressungen. Die vollflächige Anlage zweier Außenumfangsflächen 21 liegt bei Eingriffswechselstellung vor. In Eingriffswechselstellung wechselt beispielsweise die abrollende Abstützung des Pilzkopfes 19 des Bauelements 11 auf dem Abrollprofil des Bauelements 10 in eine abrollende Abstützung eines Pilzkopfes 19 des Bauelements 10 auf einem Abrollprofil 18 des Bauelements 11. Fig.2 zeigt genau die Eingriffswechselstellung.

In der Eingriffswechselstellung hat ein Pilzkopf 19 in einer Nut 16 die maximale Abweichung von der Nutmitte. Das ist insbesondere aus Fig.1a zu ersehen, in der eine Kurve 27 dargestellt ist, die von der Zahnmitte eines Pilzkopfes 19 bei dessen Abrollen in einer Nut 16 beschrieben wird. Die Kurve 27 ergibt sich aus den Stellungen aller Zahnmitten, wenn sich ein Pilzkopf ähnlich Fig.1 in eine Nut 16 hinein und dann nach dem Abrollen auf dem Abrollprofil 18 wieder aus der Nut 16 herausbewegt. Dementsprechend sind in Fig.1 die beiden Äste 27' der Kurve 27 gemäß Fig.1a dargestellt. Die Kurvenpunkte 26 der Kurve 27 bezeichnen die Stellung der Zahnmitte bei Eingriffswechselstellung. Es sind die Punkte maximaler Abweichung der Zahnmitte von der Nutmitte. Ihre Distanz h kennzeichnet die Größe des Hinterschnitts, also des aus Fig.1 ersichtlichen maximalen Abstands eines Dachflächenrandes 17' von einem benachbarten Abrollflächenrand 18', und damit die Streckung des Abrollprofils 18 gegenüber der Dachfläche 17 in Umfangsrichtung des Bauelements.

Fig.3 zeigt im Querschnitt baulich abgewandelte Bauelemente 10,11 als Bestandteile von Wandelementen 12. Jedes Wandelement 12 besteht aus zwei senkrecht zur Darstellungsebene vertikalen Bauelementen 10,10' bzw. 11,11', die durch außerhalb der Darstellungsebene liegende, dieser parallele Horizontalholme zu einem Rahmen verbunden sind. Der Rahmen umkleidet die Außenkanten einer Platte 28, eines Gitters oder einer lichtdurchlässigen Scheibe, die von Halteelementen 29 der Bauelemente 10,10' bzw. 11,11' gehalten ist. Hierzu sind Verbindungsleisten 15 und Verbindungsnuten 16 nur teilweise über den gesamten Umfang der Bauelemente 10,11 angeordnet, nämlich über einen Bereich von 180° des der Platte 28 abgewendeten Außenumfangs. Im Bereich des der Platte 28 zugewendeten Außenumfangs befindet sich eine Befestigungsnut 23, die von dem Rand der Platte 28 und einem Befestigungselement eingenommen wird. Fig.3 zeigt darüber hinaus ein Bauelement 10", das eine weitere Befestigungsnut 23 aufweist, die pilzkopfartig profiliert ist, um z.B. entsprechende Lagerteile aufnehmen zu können, die der Anbindung des Bauelements 10" z.B. an einem ortsfesten Ständer dienen.

Aus dem Vergleich der Fig.3 mit der dieselben Bauelemente darstellenden Fig.4 ist ersichtlich, daß der maximale Schwenkwinkel 360° beträgt. Es ist nämlich möglich, das von den Bauelementen 11,11' gebildete Wandelement 12 von der einen großen Seitenfläche des von den Bauelementen 10,10' gebildeten Wandelements 12 über die in Fig.3 dargestellte Stellung hinaus soweit zu klappen, daß das von den Bauelementen 11,11' gebildete Wandelement 12 auf der anderen Seite des von den Bauelementen 10,10' gebildeten Wandelements 12 zur Anlage kommt, wenn zuvor das Bauelement 10" entsprechend verschwenkt wurde. Dementsprechend ist die Verbindung geeignet, bei einem Schwenkwinkel von 360° ohne Querverbindungsteile auszukommen.

In den Figuren wurde jeweils nur dargestellt, daß zwei Bauelemente 10,11 miteinander in radial festem Zusammenhalt stehen. Bei entsprechender Profilgestaltung ist es jedoch denkbar, daß beispielsweise drei Bauelemente miteinander in Eingriff stehen, wenn es im wesentlichen auf deren Verbindung ankommt und geringere Schwenkwinkel in Kauf genommen werden können.

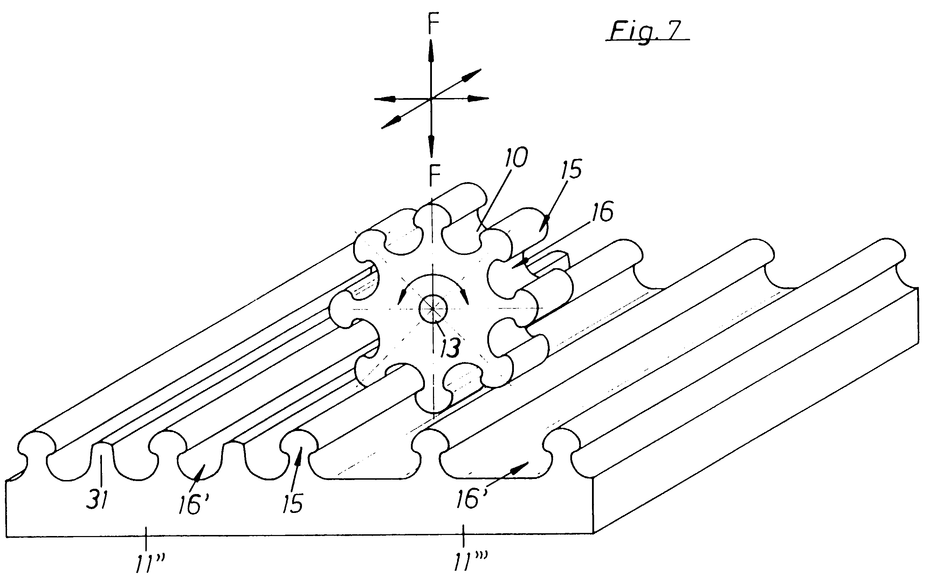

Große Schwenkwinkel bzw. rotatorische Bewegungen von Bauelementen werden ermöglicht, wenn diese gemäß den Fig.1 oder 5 bis 8 ausgebildet werden. Aus Fig.1 ist ersichtlich, daß sich das Bauelement 11 auf der dargestellten Bahn 24 um das stillstehende Bauelement 10 bewegen kann. Werden die Längsachsen 13, 14 beider Bauelemente 10,11 in gleichem Maße und in derselben Richtung angetrieben, so ergibt sich stattdessen eine horizontale Verschiebung unter kämmendem Eingriff beider Bauelemente 10,11. Zu jeden Zeitpunkt ist die querformschlüssige Koppelung über die Verbindungsleisten 15 und die Verbindungsnuten 16 gewährleistet.

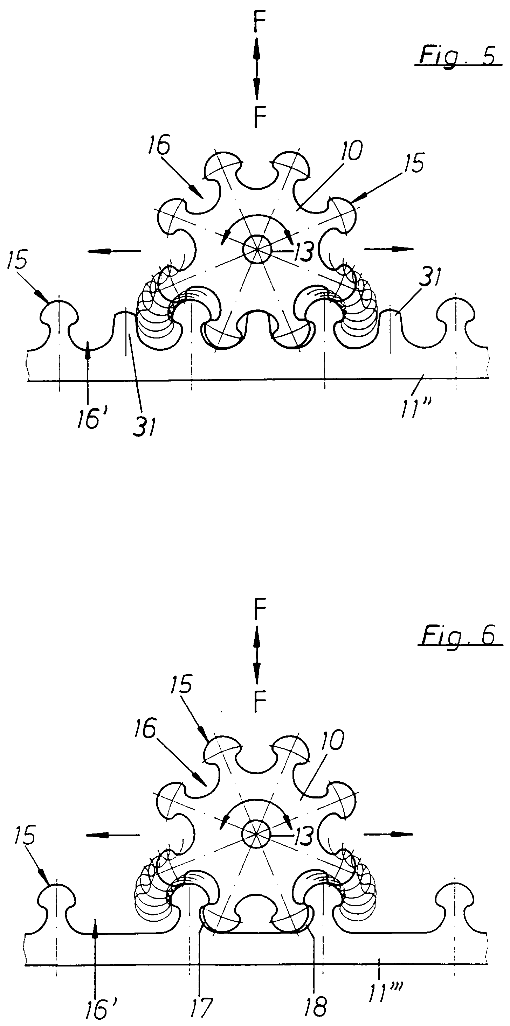

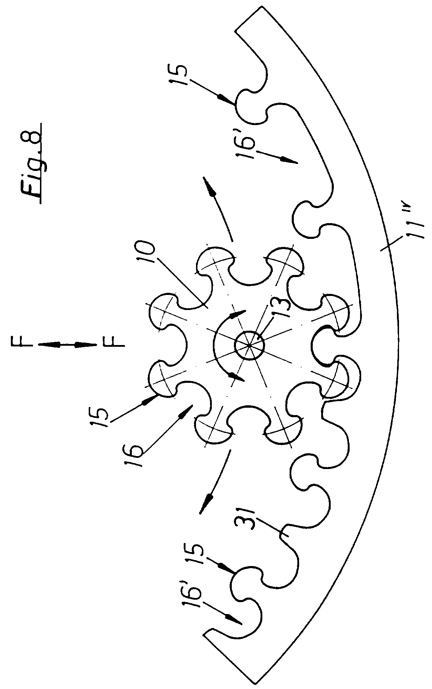

Gemäß Fig.5,6 und 7 sind die Bauelemente 11",11''' längsgestreckt, nämlich plan, also mit unendlich entfernter Achse 14. Am Bauelement 11", 11''' sind dem anderen Bauelement 10 zugewendete Verbindungsleisten 15 vorhanden, die jedoch eine verbreiterte Nut 16' zwischen sich haben. Die Verbreiterung ist erforderlich, damit das andere Bauelement 10 mit zwei Verbindungsleisten 15 in jeweils eine der Nuten 16 eingreifen kann, wobei dann entsprechende kleinere Abschnitte der Dachflächen 17 jedes Pilzkopfes 19 der pilzkopfartigen Verbindungsleisten 15 auf zugeordneten Abrollflächen 18 abrollen, die sich im wesentlichen im Bereich der durch die Pilzkopfform gebildeten Hinterschneidungen befinden. Insoweit unterscheiden sich die Ausführungsformen der Fig.5 bis 8 nicht. Wesentlich ist bezüglich der Führung des anderen Bauelements 10 im Bereich der Verbindungsnuten 16' jedoch, daß diese in Fig.5 und in den linken Abschnitten der Fig.7,8 Führungsleisten 31 aufweisen, mit denen das abrollende andere Bauelement 10 insbesondere beim Eingriffswechsel stabilisiert wird, um ein ungewolltes Außereingriffkommen der Bauelemente 10,11" bzw. 11''' bzw. 11^{IV} zu vermeiden.

Aus Fig.8 ist ersichtlich, daß die Bauelemente 10',11' auch unterschiedliche endliche Umfangsdurchmesser haben können, wobei der Umfangsdurchmesser des Bauelements 11^{IV} erheblich größer ist, als der Umfangsdurchmesser des Bauelements 10. Trotzdem kann die Verbindungsnut 16' so ausgestaltet werden, daß das andere Bauelement 10 unter Wahrung der querformschlüssigen Kopplung beider Bauelemente 10,11^{IV} bestimmungsgemäß abrollt. In den Fig.5,6 und 8 ist angedeutet, daß sich die Bauelemente 10,11", 11''',11^{IV} in den durch die geraden Pfeile angedeuteten Richtungen bewegen können, ohne voneinander getrennt zu werden. Es ist also möglich, daß sich das gesamte System in den Richtungen F-F bewegt, ohne daß seine Bauelemente 10,11", 11''',11^{IV} außer Eingriff kommen.

Fig.7 läßt darüber hinaus erkennen, daß das Bauelement 10 nicht nur in zwei einander entgegengesetzten Richtungen relativ zum anderen Bauelement 11", 11''', 11^{IV} verstellt werden kann, sondern auch in allen Richtungen einer Ebene, wenn das Bauelement 11" bzw. 11''' als Platte ausgebildet ist.

## Patentansprüche

1. Verbindung von Bauelementen (10 bis 10",11 bis 11^{IV}), insbesondere für Profilstäbe, Zahnräder od.dgl., die rotatorisch aufeinander abrollen und dabei an ihrem Umfang mit abwechselnd angeordneten, gleichbleibend profilierten Verbindungsleisten (15) und Verbindungsnuten (16) nach Art der Zahnräder kämmend ineinander greifen, und die gegen ungewolltes radiales Außereingriffkommen querformschlüssig gekoppelt sind, wobei die Verbindungsleisten (15) und Verbindungsnuten (16) um die umfangsparallelen Längsachsen (13,14) der Bauelemente relativverstellbar sind, **dadurch gekennzeichnet,** daß das ungewollte radiale Außereingriffkommen der Bauelemente (10 bis 10",11 bis 11^{IV}) mit den Verbindungsleisten (15) und Verbindungsnuten (16,16') verhindert wird, indem sie beim Aufeinanderabrollen mit Hinterschneidungen ineinander greifen.

2. Verbindung nach Anspruch 1, **dadurch gekennzeichnet,** daß die Verbindungsleisten (15) zumindest umfangsabschnittsweise abrollfähige Umfangsflächen (30) und die Verbindungsnuten (16,16') zumindest umfangsabschnittsweise den Umfangsflächen (30) zugeordnete Abrollflächen (18) aufweisen.

3. Verbindung nach Anspruch 1 oder 2, **dadurch gekennzeichnet,** daß die abrollfähigen Umfangsflächen (30) von pilzkopfartigen Verbindungsleisten (15) mit ellipsenartiger Dachfläche (17) ausgebildet sind.

4. Verbindung nach einem oder mehreren der Ansprüche 1 bis 3, **dadurch gekennzeichnet,** daß die Abrollflächen (18) der Verbindungsnuten (16,16') ellipsenartig ausgebildet sind.

5. Verbindung nach einem oder mehreren der Ansprüche 1 bis 4, **dadurch gekennzeichnet,** daß die zwischen dem jeweiligen Dachflächenrand (17') und dem am Pilzstiel (20) befindlichen Abrollflächenrand (18') gelegenen Außenumfangsflächen (21) zweier Pilzköpfe (19) in Eingriffswechselstellung vollflächig aneinander liegen.

6. Verbindung nach einem oder mehreren der Ansprüche 1 bis 4, **dadurch gekennzeichnet,** daß die zwischen dem jeweiligen Dachflächenrand (17') und dem am Pilzstiel (20) befindlichen Abrollflächenrand (18') gelegenen Außenumfangsflächen (21) zweier Pilzköpfe (19) stetig gekrümmt ausgebildet sind.

7. Verbindung nach einem oder mehreren der Ansprüche 1 bis 5, **dadurch gekennzeichnet,** daß der Abstand (a) zwischen den Dachflächenrändern (17') einer Verbindungsleiste (15) etwa dreimal so groß ist, wie die Stieldicke (b) zwischen den Abrollflächen (18) benachbarter Verbindungsnuten (16) ist.

8. Verbindung nach einem oder mehreren der Ansprüche 1 bis 6, **dadurch gekennzeichnet,** daß die als Profilstäbe ausgebildeten Bauelemente (10,10',10",11,11') von den Verbindungsnuten (16) separate Befestigungsnuten (23) aufweisen.

9. Verbindung nach einem oder mehreren der Ansprüche 1 bis 8, **dadurch gekennzeichnet,** daß die Verbindungsleisten (15) und die Verbindungsnuten (16) über 180° des Umfangs eines als Profilstab ausgebildeten Bauelements (10,11) verteilt vorhanden sind.

10. Verbindung nach einem oder mehreren der Ansprüche 1 bis 9, **dadurch gekennzeichnet,** daß mindestens zwei als Profilstäbe ausgebildete Bauelemente (10 bis 10'',11 bis 11^{IV}) mit Verbindungsleisten (15) und -nuten (16,16') längs zusammenschiebbar sind.

11. Verbindung nach einem oder mehreren der Ansprüche 1 bis 10, **dadurch gekennzeichnet,** daß die Bauelemente (10, 10',11,11') zumindest auf einen Teil ihres Umfangs einen gleich großen Umfangsdurchmesser sowie gleich große Leisten- und Nutenzahlen aufweisen.

12. Verbindung nach Anspruch 11, **dadurch gekennzeichnet,** daß mindestens ein Bauelement (10,11) als Zahnrad mit einem Wälzkreisradius von 20 mm und einer Zähnezahl von 8 ausgebildet ist.

13. Verbindung nach einem oder mehreren der Ansprüche 1 bis 10, **dadurch gekennzeichnet,** daß das eine Bauelement (11" bis 11^{IV}) einen größeren Umfangsdurchmesser als das andere Bauelement (10) hat oder plan ist, und daß zwei Verbindungsleisten (15) des anderen Bauelements (10) in eine einzige verbreiterte Verbindungsnut (16') des einen Bauelements (11" bis 11^{IV}) eingreifen.

14. Verbindung nach Anspruch 13, **dadurch gekennzeichnet,** daß das eine Bauelement (11" bis 11^{IV}) eine zwischen zwei Verbindungsleisten (15) des anderen Bauelements (10) greifende Führungsleiste (31) aufweist.

15. Verbindung nach einem oder mehreren der Ansprüche 1 bis 14, **dadurch gekennzeichnet,** daß die Bauelemente (10 bis 10",11 bis 11^{IV}) als Profilstäbe für Schutz- und Trennwände ausgebildet sind.

16. Verbindung nach einem oder mehreren der Ansprüche 1 bis 14, **dadurch gekennzeichnet,** daß die Bauelemente (10 bis 10'',11 bis 11^{IV}) als Bestandteile eines Greifbehälters einerseits und einer fixierten Halterung andererseits und/ oder von koppelbaren Arbeitspulten ausgebildet sind.

17. Verbindung nach einem oder mehreren der Ansprüche 1 bis 14, **dadurch gekennzeichnet,** daß die Bauelemente (10 bis 10",11 bis 11^{IV}) als Bestandteile von Gelenken und Scharnieren von Maschinenbausystemen und/oder als Bestandteile von Greifern oder Armen von Handhabungseinrichtungen und/ oder als Bestandteile von Bewegungsgetrieben ausgebildet sind.

18. Verbindung nach einem oder mehreren der Ansprüche 1 bis 14, **dadurch gekennzeichnet,** daß das andere Bauelement (10) ein Zahnrad und das eine Bauelement (11",11''') ein antreibender und/oder angetriebener Strang ist.

19. Verbindung nach einem oder mehreren der Ansprüche 1 bis 14, **dadurch gekennzeichnet,** daß das eine Bauelement (11",11''') eine Wand- oder Deckenplatte ist, an der das andere, als Zahnrad ausgebildete Bauelement (10) in allen Richtungen der Platte verstellbar ist.

## Claims

1. Connection of structural elements (10 to 10", 11 to 11^{IV}), especially for profiled rods, gearwheels or the like, which roll on one another in a rotational manner and for this purpose mesh with one another at their peripheries in the manner of gearwheels by means of alternately arranged connecting tongues (15) and connecting grooves (16) which are of unchanging profile, wherein the elements are coupled against undesired radial separation by lateral shape-locking means, and wherein the connecting tongues (15) and connecting grooves (16) are relatively displaceable about the longitudinal axes (13, 14) of the structural elements which extend parallel to their periphery, characterised in that the undesired radial separation of the structural elements (10 to 10", 11 to 11^{IV}) is prevented by the connecting tongues (15) and connecting grooves (16, 16') by them engaging in each other with undercuts as they roll upon each other.

2. Connection according to claim 1, characterised in that the connecting tongues (15) have peripheral surfaces (30) which are capable of rolling movement provided over at least sections of their peripheries, and the connecting grooves (16, 16') have rolling surfaces (18) associated with said peripheral surfaces (30) and provided over at least sections of the grooves.

3. Connection according to claim 1 or 2, characterised in that the peripheral surfaces (30) capable of rolling movement are provided on connecting tongues (15) shaped as mushroom heads and having elliptical-type crowning surfaces (17).

4. Connection according to one or more of claims 1 to 3, characterised in that the rolling surfaces (18) of the connecting grooves (16, 16') are of elliptical form.

5. Connection according to one or more of claims 1 to 4, characterised in that the outer peripheral surfaces (21) of two mushroom heads (19) which lie between the respective crowning surface edges (17') and the rolling surface edges (18') located on the mushroom stem (20) are in full surface-to-surface contact with each other in their position of mutual engagement.

6. Connection according to one or more of claims 1 to 4, characterised in that the outer peripheral surfaces (21) of two mushroom heads (19) which lie between the respective crowning surface edges (17') and the rolling surface edges (18') located on the mushroom stem (20) are continuously curved.

7. Connection according to one or more of claims 1 to 5, characterised in that the spacing (a) between the crowning surfaces edges (17') of a connecting tongue (15) is approximately three times as great as the stem thickness (b) between the rolling surfaces (18) of adjacent connecting grooves (16).

8. Connection according to one or more of claims 1 to 6, characterised in that the structural elements (10, 10', 10", 11, 11') formed as profiled rods have fixing grooves (23) separate from the connecting grooves (16).

9. Connection according to one or more of claims 1 to 8, characterised in that the connecting tongues (15) and the connecting grooves (16) are provided distributed over 180° of the periphery of a structural element (10, 11) formed as a profiled rod.

10. Connection according to one or more of claims 1 to 9, characterised in that at least two structural elements (10 to 10", 11 to 11^{IV}) formed as profiled rods can be displaced towards each other lengthwise by connecting tongues (15) and connecting grooves (16, 16').

11. Connection according to one or more of claims 1 to 10, characterised in that the structural elements (10, 10', 11, 11') have, at least on a part of their periphery, an equal size peripheral diameter as well as the same number of tongues and grooves.

12. Connection according to claim 11, characterised in that at least one structural element (10, 11) is a toothed wheel having a rolling circle radius of 20mm and 8 teeth.

13. Connection according to one or more of claims 1 to 10, characterised in that the one structural element (11" to 11^{IV}) has a larger peripheral diameter than the other structural element (10) or is flat, and that two connecting tongues (15) of said other structural element (10) engage in a single larger connecting groove (16') of said one structural element (11" to 11^{IV}).

14. Connection according to claim 13, characterised in that said one structural element (11" to 11^{IV}) has a guide tongue (31) engaging between two connecting tongues (15) of said other structural element (10).

15. Connection according to one or more of claims 1 to 14, characterised in that the structural elements (10 to 10", 11 to 11^{IV}) are profiled rods for protective screens and dividing walls.

16. Connection according to one or more of claims 1 to 14, characterised in that the structural elements (10 to 10", 11 to 11^{IV}) are formed as components of a gripping container on the one hand and a fixed holder on the other hand and/or are components of couplable working desks.

17. Connection according to one or more of claims 1 to 14, characterised in that the structural elements (10 to 10", 11 to 11^{IV}) are formed as components of joints and hinges of machine systems and/or as components of grippers or arms of manipulating devices and/or as components of moving gears.

18. Connection according to one or more of claims 1 to 14, characterised in that said other structural element (10) is a toothed wheel and said one structural element (11", 11''') is a driving and/or driven track.

19. Connection according to one or more of claims 1 to 14, characterised in that said one structural element (11", 11''') is a wall plate or ceiling plate on which the other structural element (10) formed as a toothed wheel is displaceable in all directions of the plate.

## Revendications

1. Liaison d'éléments (10 à 10", 11 à 11^{IV}), en particulier pour barres profilées, roues dentées, etc., qui roulent les uns sur les autres suivant un mouvement de rotation en s'engrenant à la manière de roues dentées au niveau de leur périphérie grâce à des nervures de liaison (15) et à des rainures de liaison (16) disposées en alternance et à profil constant, et qui sont accouplés par complémentarité de forme transversale à l'encontre d'un désengrènement radial involontaire, les nervures de liaison (15) et les rainures de liaison (16) pouvant être déplacées relativement sur les axes longitudinaux (13, 14) parallèles desdits éléments, **caractérisée** en ce que le désengrènement radial involontaire des éléments (10 à 10", 11 à 11^{IV}) est empêché grâce aux nervures de liaison (15) et aux rainures de liaison (16, 16'), qui s'engrènent avec des contre-dépouilles lorsque les éléments roulent les uns sur les autres.

2. Liaison selon la revendication 1, **caractérisée** en ce que les nervures de liaison (15) comportent au moins sur des sections de leur périphérie des surfaces périphériques apte à rouler (30), tandis que les rainures de liaison (16, 16') comportent au moins sur des sections de leur périphérie des surfaces de roulement (18) associées aux surfaces périphériques (30).

3. Liaison selon la revendication 1 ou 2, **caractérisée** en ce que les surfaces périphériques aptes à rouler (30) de nervures de liaison en forme de tête de champignon (15) sont pourvues d'une surface supérieure ellipsoïdale (17).

4. Liaison selon l'une au moins des revendications 1 à 3, **caractérisée** en ce que les surfaces de roulement (18) des rainures de liaison (16, 16') sont ellipsoïdales.

5. Liaison selon l'une au moins des revendications 1 à 4, **caractérisée** en ce que les surfaces périphériques extérieures (21) de deux têtes de champignons (19) qui sont situées entre le bord (17') de la surface supérieure et le bord (18') de la surface de roulement situé au niveau de la tige de champignon (20) sont complètement appliquées l'une contre l'autre en position alternative d'engrènement.

6. Liaison selon l'une au moins des revendications 1 à 4, **caractérisée** en ce que les surfaces périphériques extérieures (21) de deux têtes de champignons (19) qui sont situées entre le bord (17') de la surface supérieure et le bord (18') de la surface de roulement situé au niveau de la tige de champignon (20) sont pourvues d'une courbure continue.

7. Liaison selon l'une au moins des revendications 1 à 5, **caractérisée** en ce que la distance (a) entre les bords (17') de la surface supérieure d'une nervure de liaison (15) est égale à environ trois fois l'épaisseur de tige (b) définie entre les surfaces de roulement (18) de rainures de liaison (16) voisines.

8. Liaison selon l'une au moins des revendications 1 à 6, **caractérisée** en ce que les éléments (10, 10', 10", 11, 11') conçus comme des barres profilées comportent des rainures de fixation (23) distinctes des rainures de liaison (16).

9. Liaison selon l'une au moins des revendications 1 à 8, **caractérisée** en ce que les nervures de liaison (15) et les rainures de liaison (16) sont réparties sur 180° de la périphérie d'un élément (10, 11) conçu comme une barre profilée.

10. Liaison selon l'une au moins des revendications 1 à 9, **caractérisée** en ce qu'au moins deux éléments (10 à 10", 11 à 11^{IV}) conçus comme des barres profilées et pourvus de nervures (15) et de rainures (16, 16') de liaison sont aptes à coulisser longitudinalement.

11. Liaison selon l'une au moins des revendications 1 à 10, **caractérisée** en ce que les éléments (10, 10', 11, 11') présentent sur une partie au moins de leur périphérie un diamètre égal et un nombre égal de nervures et de rainures.

12. Liaison selon la revendication 11, **caractérisée** en ce qu'au moins un élément (10, 11) est conçu comme une roue dentée présentant un rayon de cercle de roulement de 20 mm et un nombre de dents s'élevant à 8.

13. Liaison selon l'une au moins des revendications 1 à 10, **caractérisée** en ce qu'un premier élément (11" à 11^{IV}) a un diamètre plus grand qu'un second élément (10) ou est plan, et en ce que deux nervures de liaison (15) du second élément (10) s'engagent dans une seule rainure de liaison élargie (16') du premier élément (11" à 11^{IV}).

14. Liaison selon la revendication 13, **caractérisée** en ce que le premier élément (11" à 11^{IV}) comporte une nervure de guidage (31) qui s'engage entre deux nervures de liaison (15) du second élément (10).

15. Liaison selon l'une au moins des revendications 1 à 14, **caractérisée** en ce que les éléments (10 à 10", 11 à 11^{IV}) sont conçus comme des barres profilées pour des parois de protection et de séparation.

16. Liaison selon l'une au moins des revendications 1 à 14, **caractérisée** en ce que les éléments (10 à 10", 11 à 11^{IV}) sont conçus comme des parties constitutives d'un récipient de préhension, d'une part, et d'une attache fixe, d'autre part, et/ou de pupitres de travail aptes à être couplés.

17. Liaison selon l'une au moins des revendications 1 à 14, **caractérisée** en ce que les éléments (10 à 10", 11 à 11^{IV}) sont conçus comme des parties constitutives d'articulations et de charnières de systèmes de constructions mécaniques et/ou comme des parties constitutives d'organes de préhension ou de bras de dispositifs de manipulation et/ou comme des parties constitutives de transmissions de mouvement.

18. Liaison selon l'une au moins des revendications 1 à 14, **caractérisée** en ce que le second élément (10) est une roue dentée tandis que le premier élément (11", 11''') est un tronçon d'entraînement et/ou entraîné.

19. Liaison selon l'une au moins des revendications 1 à 14, **caractérisée** en ce que le premier élément (11", 11''') est une plaque de paroi ou de plafond au niveau de laquelle le second élément (10) conçu comme une roue dentée est mobile dans tous les sens de la plaque.
